# EUROPEAN PATENT SPECIFICATION

(11) **EP 4 442 520 B1**
(45) Date of publication and mention of the grant of the patent: **25.11.2026**
(21) Application number: 23166826.0
(22) Date of filing: 05.04.2023
(51) Int. Cl.: B60S 1/56, B60S 1/34, B60S 1/04

(54) **VEHICLE ROOF MODULE FOR A SENSOR**
FAHRZEUGDACHMODUL FÜR EINEN SENSOR
MODULE DE TOIT DE VÉHICULE POUR UN CAPTEUR

(43) Date of publication of application: 09.10.2024
(73) Proprietor: Inalfa Roof Systems Group B.V., 5807 GW Oostrum (NL)
(72) Inventor: Aarts, Bob Hubertus Marcus Maria, 6045 CD Roermond (NL); Albers, Thomas Anton Martijnszoon, 5804 XJ Venray (NL)
(74) Representative: De Vries & Metman

(56) References cited:
- DE-A1- 102021 206 715
- FR-A1- 2 888 189
- FR-A1- 3 127 458
- US-A1- 2022 355 766

## Description

The invention relates to a vehicle roof module for a sensor such as a LiDAR sensor or other light sensitive sensor. In particular, the invention relates to a cleaning assembly for a screen of a housing enclosing such a sensor.

### BACKGROUND

In support of driving assistance for vehicles and for the further aim of autonomous driving of vehicles, sensors for image recognition, for example of road and traffic signs, are being mounted on such vehicles. Thereto, the sensor may be placed within a sensor housing on top of the roof of a vehicle to provide a wide field of view. The sensor housing will have a front screen or visor to provide a light sensitive sensor, such as a LiDAR sensor, with an unobstructed field of view. As with any other vehicle screen or visor, such as head lights or front wind shield, dirt and dust may accumulate over time on the screen. In order to ensure proper operation and maintain a clear field of view, the screen or visor may need to be cleaned over time. Though wipers may be applied with such screens, a problem therewith is that these could interfere with the field of view of the sensor.

### SUMMARY OF INVENTION

It is an object of the invention to alleviate the above-mentioned the disadvantage. When not used to wipe the visor of the sensor housing, the wiper is preferably in a position that allows for a clear field of view of the sensor. In addition, the wiper is preferably in a position that does not protrude from the sensor housing. As this may either result in wind noise, in the wiper accumulating dirt and dust, and/or leaves the wiper being prone to fracture or tampering. In particular, the wiper blade or lip of the wiper blade may be prone to wear and tear. Accordingly, it is preferred to shield the wiper when not in use in order to prolong the lifetime and preserve proper functioning of the wiper.

According to the state of the art as defined by document DE 10 2021 206715 A1 a vehicle roof module with a sensor housing is known. The vehicle roof module includes a wiper assembly with a wiper blade on a wiper arm, a sensor housing with a visor, and a guide defining a wiping path and a parking path. The roof module further includes a sliding mechanism configured for sliding the wiper assembly over the guide along the wiping path and the parking path. When sliding the wiper assembly over the wiping path slides the wiper arm along the sensor housing such that the wiper blade wipes the visor and when sliding the wiper assembly over the parking path slides the wiper arm along the sensor housing while the wiper blade is lifted from the visor.

As the material of the blade of the wiper, such as e.g. rubber, will be under tension in an operating position wherein it is pressed with its lip against the visor and preferably relaxed or unpressed, that is not under tension against the visor, when in a disengaged i.e. resting position, the inventors discovered it to be advantageous that when moving the wiper into the resting position, the wiper lip and wiper assembly are first disengaged from the visor before moving the wiper assembly to a parking slot separate from the visor. Similarly, vice versa, when moving to the operating position, the wiper assembly first moves towards the operating position before the wiper lip engages or contacts the visor. In this manner, the wiper blade lip is prevented from grating or scraping over an edge of the visor or over a transition of material between visor and sensor housing.

In accordance with the present invention the vehicle roof module is characterized as set forth in the characterizing part of claim 1.

Further objects, aspects, effects and details of particular embodiments of the invention are described in the following detailed description of a number of exemplary embodiments, with reference to the drawings.

### BRIEF DESCRIPTION OF DRAWINGS

By way of example only, the embodiments of the present disclosure will be described with reference to the accompanying drawing, wherein:
FIG. 1 illustrates a perspective view of a vehicle roof with an example of a vehicle roof module in accordance with the invention;
FIG. 2 illustrates the vehicle roof module of Fig. 1 in more detail;
FIG. 3 illustrates in cross-section an example of a wiping assembly in accordance with the invention;
FIG. 4 illustrates components of an example of a sliding mechanism in relation to a visor in accordance with the invention;
FIG. 5 is a bottom-up view of the components of Fig. 4;
FIG. 6A-6C illustrate top views of the sliding mechanism of Fig. 5 in different positions in accordance with the invention;
FIGS. 7A-7C illustrates illustrate top views of another example of a sliding mechanism in different positions in accordance with the invention; and
FIG. 8 illustrates another example of a vehicle roof module.

### DETAILED DESCRIPTION

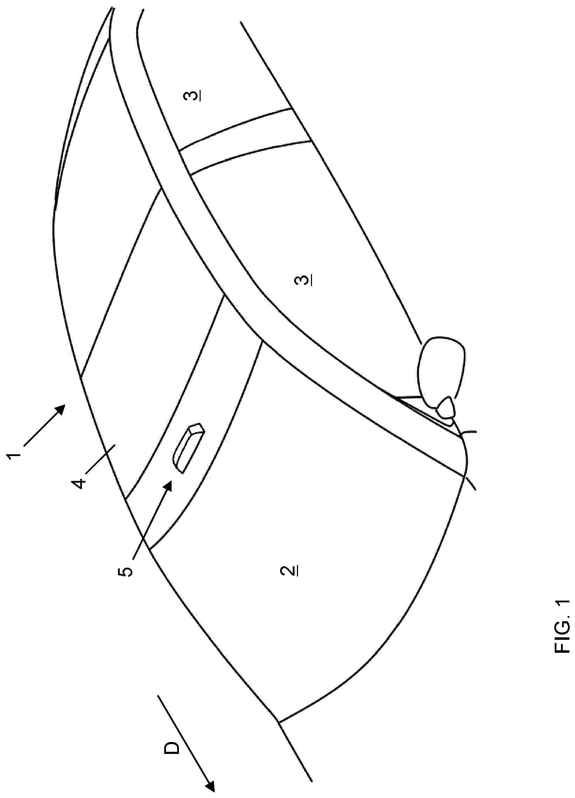

Referring to Fig. 1, a perspective view of an example of a vehicle roof is schematically illustrated. Further shown are vehicle front window 2, side windows 3 and an optional roof window 4. On top of the vehicle roof a vehicle roof module 5 is shown, also referred to as an external sensor module.

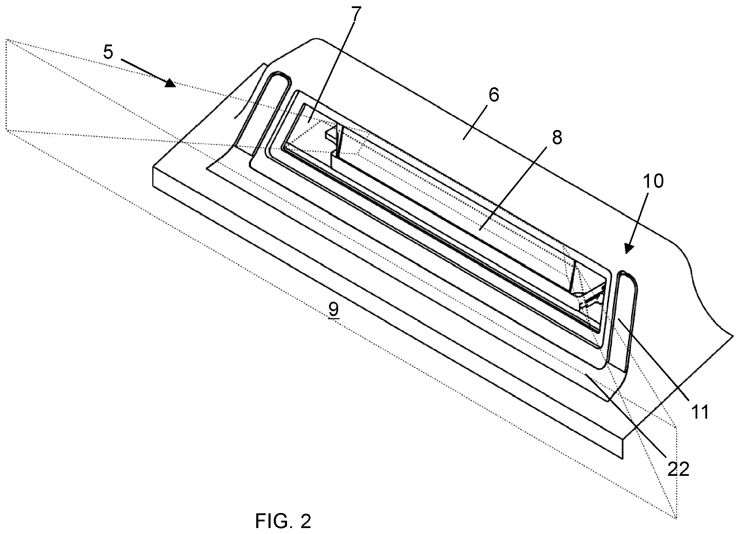

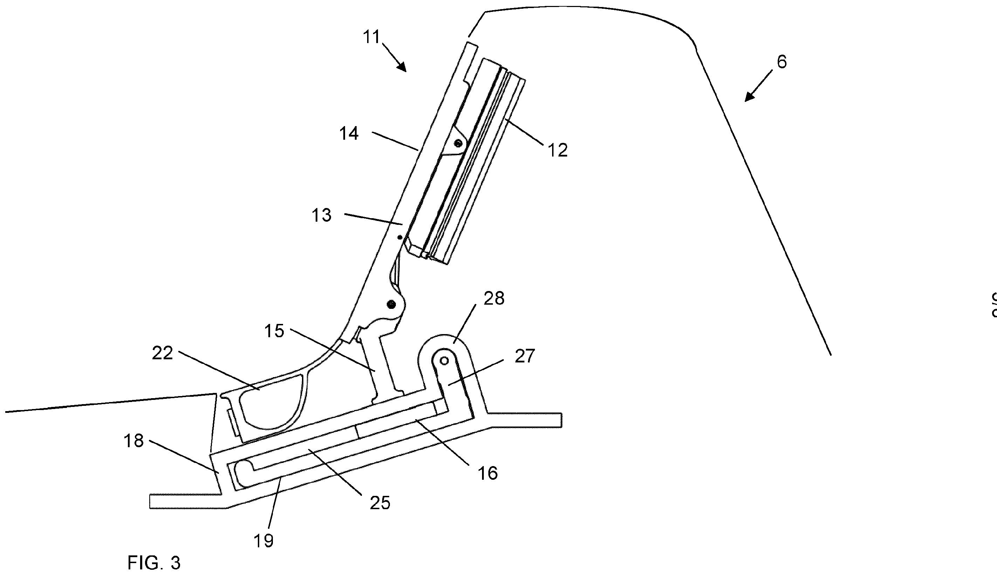

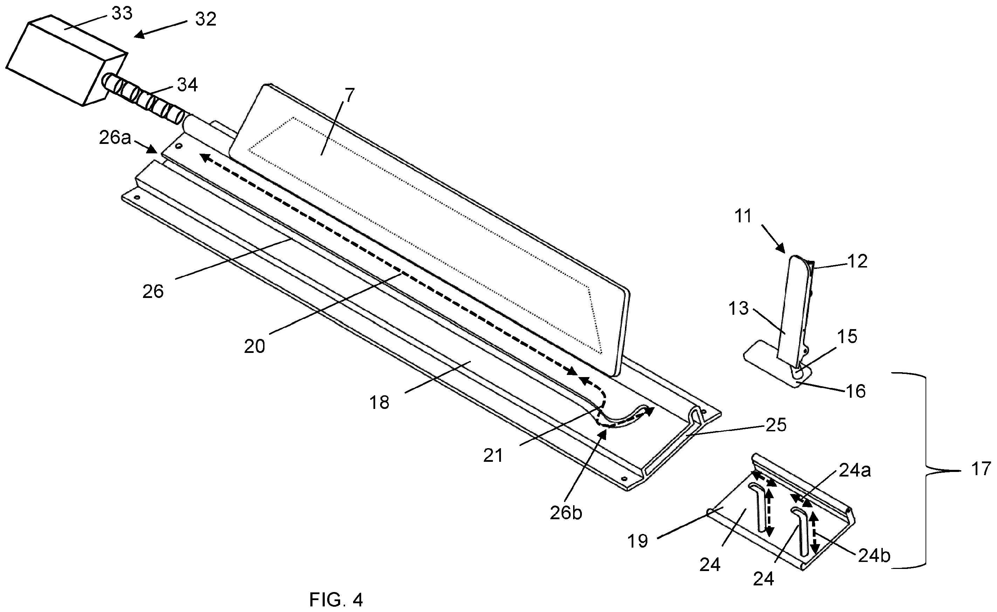

Referring to Fig. 2, the vehicle roof module 5 of Fig. 1 is shown in more detail. In this example the module 5 encloses a LiDAR sensor. The module 5 further includes a sensor housing 6 having a visor 7 or screen provided at a front side of the housing with reference to a forward driving movement of a vehicle, indicated by arow D. The sensor housing 6 includes a sensor 8 which has a field of view 9 that is aligned with the visor, which alignment ensures that objects within its field of view 9 may be detected by the sensor. Within the sensor housing 6, adjacent to the side of the visor 7 is a parking slot 10. In this embodiment on one side of the visor, in other embodiments the parking slot may be on another side adjacent of the visor or on each side adjacent of the visor. The parking slot 10 provides a resting position for a wiper assembly 11, an example of which is shown in more detail in Fig. 3. The roof module 5 further includes a guide 18, in this embodiment running in front adjacent to the visor 7. The guide 18 defines a wiping path 20 and a parking path 21, as shown Fig.4. As shown in Figs. 1 and 3, the guide 18 is covered by a seal 22. In this example a single flat tail seal, in other examples it may be a bulb seal.

The wiper assembly 11 shown in Fig. 3 has a wiper blade 12 that is mounted on a wiper arm 13. In this example, the wiper arm 13 is provided with a back cover 14 which is configured such that when the wiper assembly 11 is in the resting position in the parking slot 10, the back cover 14 is substantially flush with an outer surface of the sensor housing 6. In the embodiment of Fig. 3, the wiper arm 13 is hingeably mounted on a wiper rod 15 of a planar base 16. The wiper assembly may further include tensioning means for tensioning the wiper blade, or at least the lip of the wiper blade, against the visor 7 in an operating position. The tensioning mean s may be a torsion spring, coil spring, elastomeric material or other suitable means having an inclination to return to a default position after being moved out thereof. The tensioning means may further include means for limiting the angle at which the wiper blade is positioned relative to the visor. This may ensure that when the wiper assembly is moved away from the visor, the wiper blade will disengage from the visor.

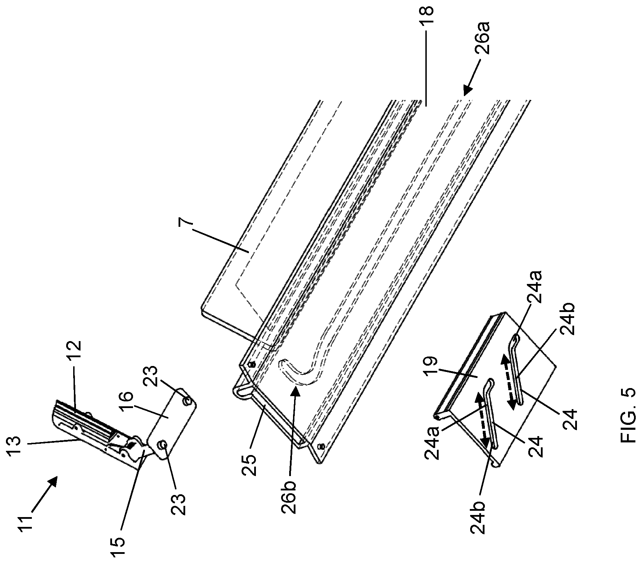

Referring to Figs. 3-5, an example of a sliding mechanism 17 of the roof module of Fig. 1 is shown. The sliding mechanism 17 is configured for sliding the wiper assembly 11 over the wiping path 20 and over the parking path 21, each indicated by dotted lines in Fig. 4. The guide 18 and the sliding mechanism 17 are configured such that when sliding the wiper assembly11 over the wiping path 20 the wiper arm 13 slides along the sensor housing 6 such that the wiper blade 12 may wipe the visor 7. The guide 18 and the sliding mechanism 17 are further configured such that when sliding the wiper assembly 11 over the parking path 21 the wiper arm 13 slides along the sensor housing 6 while the wiper blade 12 is lifted from the visor 7.

The sliding mechanism 17 includes a planar base 16 having on one side at least one sliding pin, in this embodiment two sliding pins 23. On another side of the planer base 16 there is a rod, in this embodiment wiper rod 15, which is configured for carrying the wiper assembly 11. The sliding mechanism 17 further includes a driven slider 19 having a pin sliding track 24 for each respective at least one sliding pin 23. Hence, in the embodiment of Figs. 3-6 the slider 19 has two pin sliding tracks 24. Each pin sliding track 24 of the driven slider has a parking portion 24a and a wiping portion 24b. The parking portion refers to a part of the pin sliding track along which the pin will travel when moving the wiper assembly from the resting position towards the wiping position. Furthermore, the parking portion is where the pin will reside when the wiper assembly is in the parking slot. The wiping portion is where the pin will reside when the wiper assembly is in the wiping position.

The guide 18 includes a slider channel 25 for guiding the driven slider 19 parallel to the sensor housing 6. The driven slider 19 has a flat main body and the slider channel is adapted to the main body of the driven slider 19. The guide 18 further includes a rod guiding slot 26 for guiding the rod 15 along the wiping path 20 and the parking path 21. The rod guiding slot 26 has a straight wiping portion 26a and a curved parking portion 26b. The wiping portion 26a of the rod guiding slot 26 runs parallel to the visor 7 whereas the parking portion 26b runs away and around the visor 7. Hence, the guide 18 may determine the wiping path 20 and the parking path 21 by way of the shape of the respective wiping portions and parking portions of the rod guiding slot 26. While the pin sliding track or tracks 24 of the driven slider 19 determine the movement of the planar base 16 through the slider channel 25 in relation to the driven slider. As the rod is mounted on the base, the shape of the rod guiding slot and pin sliding track are intended to support and cooperate to obtain the desired kinematic pattern of the wiper assembly in relation to the visor of the sensor housing. Accordingly, when the driven slider moves parallel to the sensor housing through the slider channel, the at least one sliding pin is forced to move through the pin sliding track thereby moving the base, which movement of the base forces the rod to travel through the rod sliding track thereby moving the wiper assembly along the sensor housing and the visor. The shape and size of the rod guiding slot in the guide and the at least one pin sliding track in the driven slider are preferably configured such that the rod and at least one pin confine the base to defined positions that make up the parking path 20 and the wiping path 21. Thereby, they provide a predetermined trajectory for the wiper assembly mounted thereon.

Hence, the guide 18 and sliding mechanism 17 are arranged such that when moving the driven slider 19 in the slider channel 25 along the wiping path 20, the at least one sliding pin 23 slides in the pin sliding track wiping portion 24b and the rod guiding track wiping portion 26a guides the wiper rod 15 parallel along the visor 7. Furthermore, when moving the driven slider 19 in the slider channel 25 along the parking path 21, the at least one sliding pin 23 slides in the pin sliding track parking portion 24a, and the rod guiding track parking portion 26b guides the wiper rod 15 at a deflection, in this embodiment a curve, along the visor 7.

In the embodiment of Figs. 3-5, the slider channel 25 has a profile, in cross-section, with a recessed slide portion 28 extending in a longitudinal direction of the channel. As can be seen in the cross-section of Fig. 3, the recessed slide portion 28 is also perpendicular to the longitudinal plane of the slider channel 25. The slider 19, in this embodiment, further includes a raised wall or flange 27 that is intended to cooperate with the recessed portion 28 and to slide therethrough when the driven slider is moved through the channel. As seen in Fig. 3, the flange 27 protrudes perpendicular from a main body of the driven slider 19. The co-operative configuration of recessed portion 28 and flange 27 may prevent the driven slider 19 from skewing within the channel 25.

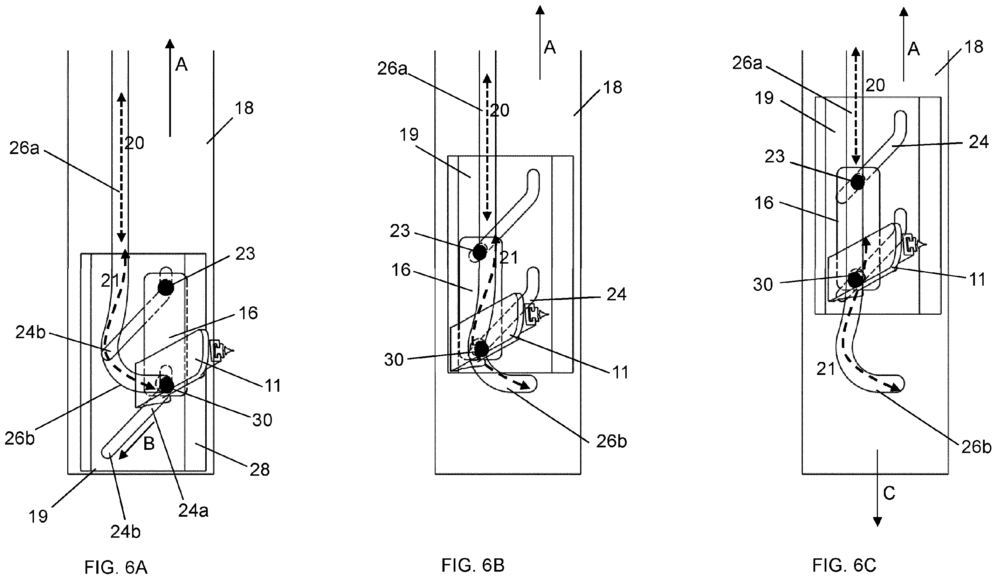

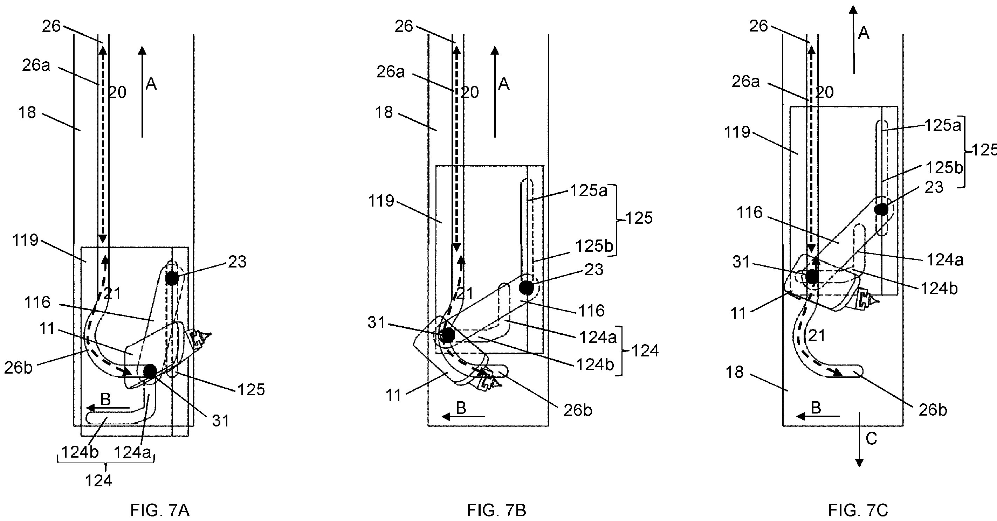

Referring to Figs. 6A-6C, and 7A-C the kinematic movement of two different embodiments are clarified in more detail. The figures provide a top view with components at various layers being displayed in a transparent manner. Herein, the wiper assembly 11, guide 18 and sliding mechanism formed by base 16 and driven slider 19 are shown in top-view. Herein, the components are illustrated in a transparent way in order to clarify the relative locations of various elements. As for example, the rod on the base 16 that carries the wiper assembly 11 would not be visible in a top view as it is underneath the wiper assembly, the relative location thereof is indicated by a circle 30. Similarly, only relative location of the base 16 itself within the guide 18 and the pins 23 underneath the base are indicated. In this example, circle 30 indicates the location of both the rod as one of the pins, as these are axially aligned with one another.

Referring to Fig. 6A, the wiper assembly 11 is in the resting position as when located in the parking slot. The rod 30 is within the curved parking portion 26b of the rod guiding slot. When the driven slider 19 is moved in the direction as indicated by arrow A, the pin sliding track will move relative to the pins, first the pins 23, 30 remain in place while the parking portions 24a moves in the direction of arrow A, then the pin sliding track parking portions 24b will force the pins 23, 30 to move in the direction of arrow B, towards the pin sliding track wiping portions 24b, thereby sliding the base 16. With the sliding of the base 16, the rod 30 will be moved along and move through the rod guiding slot through the curved parking portion 26b, thereby travelling along the parking path 21. Hence, the guiding of the rod through the rod guiding track parking portion 26b occurs simultaneously with the sliding of pins 23, 30 through the pin sliding parking portions 24a and pin sliding track wiping portions 24b consecutively. Referring to Fig. 6B, when the pins 23, 30 respectively are moved at outer ends of pin sliding track wiping portions 24b, the rod location 30 is still in the curved parking portion 26b of the rod guiding slot. Referring to Fig. 6C, when the driven slider 19 is moved still further in the direction of arrow A, the pins 23, 30 return from the respective outer ends of the pin sliding track wiping portions 24b, moving slightly inwards, while the rod location 30 will travel towards the wiping portion 26a of the rod guiding slot and will consequently be guided further through the wiping portion of the rod guiding slot. From thereon, the wiper assembly 11 is in the wiping position, wherein the wiper blade is in contact with the visor 7, and will further move along the wiping path 20 to wipe the visor.

Vice versa, in order to move the wiper assembly out of the wiping path 20 and into the parking slot 10 via the parking path 21, the location of the pin 23 and location of the pin and the rod 30 will follow the kinematic movement as described above with reference in reverse order from Fig. 6C to Fig. 6A. Herein the riven slider 19 will be moved in the direction of arow C.

Referring to Figs. 7A-7C, another example of an embodiment of a sliding mechanism and guide of a vehicle roof module are illustrated. Herein, similar elements are indicated with the same reference numbers as in Figs.6A-6C. In this embodiment base 116 is provided with two sliding pins, the location of which is indicated by circles 23 and 31. Circle 31 also indicates the location of the rod on the base 116. Correspondingly, the driven slider 119has two pin sliding tracks 124, 125 which each include a pin sliding track parking portion 124a, 125a and a pin sliding track wiping portion 124b, 125b. In contrast to the embodiment of Figs. 6A-6C wherein the pin sliding tracks run parallel to each other, in the embodiment of Figs. 7A-7C the pin sliding tracks have different shapes. The parking portion 124a and wiping portion 124b of first sliding track 124 partially extend at an angle to one another, substantially perpendicular in this example, whereas the parking portion 125a and wiping portion 125b of second sliding track 125 extend in line with each other. Furthermore, parts of the parking portions 124a, 125a of the first and second sliding track 124, 125 run partially parallel to each other.

Referring to Fig. 7A, the wiper assembly 11 is again in the resting position as when located in the parking slot. The rod 31 is within the curved parking portion 26b of the rod guiding slot 26a, 26b. When the driven slider 119 is moved in the direction as indicated by arrow A, the pin sliding track will move relative to the pin 31, first the pin 31 remains in place while the parking portion 124a moves in the direction of arrow A, then the pin sliding track wiping portion 124b will force the pin 31 to move in the direction of arrow B, thereby rotating the base 116. With the rotating of the base 116, the rod 31 will be moved along and move through the rod guiding slot 26 through the curved parking portion 26b, thereby travelling along the parking path 21 as indicated by a dotted lined. Hence, the guiding of the rod through the rod guiding track parking portion 126b occurs simultaneously with the sliding of pin 31 through the pin sliding parking portion 124a and pin sliding track wiping portion 124b consecutively. Referring to Fig. 7B, when the pin 31 is at an outer end of pin sliding track wiping portion 124b, the rod location 31 is still in the curved parking portion 26b of the rod guiding slot. Referring to Fig. 7C, when the driven slider 119 is moved still further in the direction of arrow A, the pin 31 returns from the outer end of the pin sliding track wiping portion 124b, while the rod 31 will travel towards the wiping portion 26a of the rod guiding slot and will consequently be guided further through the wiping portion 26a of the rod guiding slot. From thereon, the base 116 slides in the direction of arrow A and the wiper assembly 11 is in the wiping position, wherein the wiper blade is in contact with the visor, and will further move along the wiping path 20 to wipe the visor.

As can be seen in the Figs. 7A-7C, in contrast to the embodiment as shown in Figs. 6A-6C, the base 116 rotates around pin 23 and the wiper assembly 11 mounted thereon will accordingly rotate in relation to the visor.

In each of the embodiments described, the roof module may further include a drive assembly 32, as e.g. shown in Fig. 4, configured for driving the driven slider 19,119, back and forth, through the slider channel of the guide 18. Thereto, the drive assembly 32 may include a motor 33 and a drive cable 34, the motor being arranged for operating the driven slider 19,119 by means of the drive cable 34. The motor may be any kind of electric motor capable of pulling and pushing the drive cable 34 in either direction. In order to address any tolerance of the drive assembly 32, as for example in the longitudinal driving direction, the parking portion of the pin sliding track 24, 124 may be partially straight, extending in the direction of travel of the driven slider.

To further control movement of the drive cable, for example to prevent coiling or convolving thereof, the drive cable may be fed through a rigid sleeve or gutter. Accordingly, the slider channel 25 may be provided with such a gutter. In the embodiment of Figs. 3 and 4, the recessed slide portion 28 extending longitudinally within the slider channel 25 may function as drive cable gutter. Actuation of the motor drive and to start a wiping operation of the visor may be triggered by a signal from an electronic control unit. The control unit may receive a signal from e.g. a rain sensor, or a signal indicating a certain level of pollution of the visor, and respond to one of these signals by initiating the wiping operation.

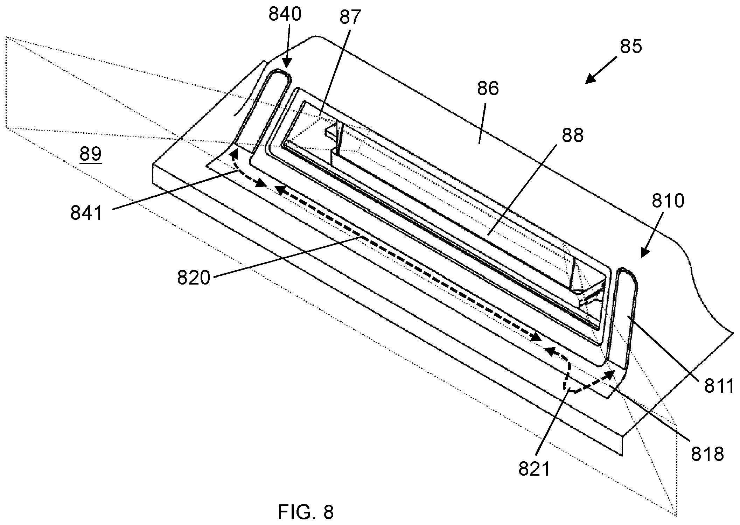

Referring to Fig. 8, another example of a vehicle roof module 85 is illustrated schematically. The module 85 also includes sensor housing 86 having a visor 87 provided at a front side of the housing. The sensor housing 86 again includes a sensor 88 which has a field of view 89 that is aligned with the visor 87. Within the sensor housing 86, adjacent to the side of the visor 87 is the first parking slot 810 and to another side adjacent to the visor 87 there is an additional, second parking slot 840. The parking slots 810, 840 each provide resting positions for the wiper assembly 811 as described above. Also this roof module 85 includes a guide 818 running in front adjacent to the visor 87. The guide 818 defines the wiping path 820 and parking path 21, and an additional parking path 841. The additional parking path 841 runs between the second parking slot 840 and the wiping path 820. In this example, a sliding mechanism is configured for sliding the wiper assembly 11 over the guide 818 along the wiping path 820. The sliding mechanism is further configured for sliding over the -now first- parking path 821, and over the additional parking path 841. Similar as described for the above examples of Figs.6A-C and 7A-C, sliding the wiper assembly 11 over the wiping path 20 slides the wiper arm 13 along the sensor housing 6 such that the wiper blade 12 wipes the visor 7. Furthermore, sliding the wiper assembly 11 either over the first parking path 821 or over the additional parking 841 path, slides the wiper arm 13 along the sensor housing 86 while the wiper blade 12 is lifted from the visor 87.

In another example of a vehicle roof module, instead of a second parking slot as in the example of Fig. 8, the space next to the visor may be used to arrange a nozzle on one side and one parking slot on the other side next to the housing. The nozzle may be mounted for example on a telescopic arm or other means for movably protruding from the side. A door or cover may be arranged to close off the nozzle slot when not in use and provide an aerodynamic smooth surface.

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

## Claims

1. Vehicle roof module (1) for a sensor, comprising:
a wiper assembly (11) comprising a wiper blade (12) carried on a wiper arm (13);
a sensor housing (6) comprising a visor (7);
a guide (18) defining a wiping path (20) and a parking path (21);
a sliding mechanism (17) configured for sliding the wiper assembly (11) over the guide (18) along the wiping path (20) and the parking path (21);
wherein sliding the wiper assembly (11) over the wiping path (20) slides the wiper arm (13) along the sensor housing (6) such that the wiper blade (12) wipes the visor (7);
wherein sliding the wiper assembly (11) over the parking path (21) slides the wiper arm (13) along the sensor housing (6) while the wiper blade (12) is lifted from the visor (7),
**characterized in that** the sliding mechanism (17) comprises:
a planar base (16, 116) comprising on one side at least one sliding pin (23) and on another side a rod (15, 30, 31) configured for carrying the wiper assembly (11); and
a driven slider (19,119) comprising a pin sliding track (24) for each respective at least one sliding pin (23); and
wherein the guide (18) comprises:
a slider channel (25) for guiding the driven slider (19,119) parallel to the sensor housing (6); and
a rod guiding slot (26) for guiding the wiper rod (15, 30,31) along the wiping path (20) and the parking path (21).

2. Vehicle roof module according to claim 1,
wherein the rod guiding slot (26) has a straight wiping portion (26a) and a curved parking portion (26b);
wherein the pin sliding track (24) has a parking portion (24a,124a) and a wiping portion (24b, 124b).

3. Vehicle roof module according to claim 2,
wherein, when moving the driven slider (19,119) in the slider channel (25) along the wiping path (20), the at least one sliding pin (23) slides in the pin sliding track wiping portion (24b, 124b) and the rod guiding track wiping portion (26a) guides the wiper rod (15, 30, 31) parallel along the visor (7); and
wherein, when moving the driven slider (19,119) in the slider channel (25) along the parking path (21), the at least one sliding pin (23) slides in the pin sliding track parking portion (24a, 124a), and the rod guiding track parking portion (26b) guides the wiper rod (15, 30,31) at a deflection along the visor (7).

4. Vehicle roof module according to any of the preceding claims, the sensor housing (6) further comprising a parking slot (10) adjacent to the visor (7) providing a resting position for the wiper assembly (11);
wherein sliding over the parking path (21) slides the wiper assembly (11) between the resting position in the parking slot (11) and an operational position on the wiping path (20).

5. Vehicle roof module according to claim 4,
wherein in the resting position the wiper assembly (11) rests within the parking slot (10) with the wiper blade (12) disengaged from the visor (7); and
in the operating position the wiper assembly (11) engages the visor (7) with the wiper blade (12).

6. Vehicle roof module according to any of the preceding claims, wherein, when sliding over the parking path (20) out of the operational position and towards the resting position, the wiper blade (11) is lifted from the visor (11) while the wiper assembly (11) slides further along the sensor housing (6).

7. Vehicle roof module according to any of the preceding claims, wherein the slider channel (25) comprises a recessed slide portion (28).

8. Vehicle roof module according to any of the preceding claims, wherein the wiper assembly further comprises tensioning means for tensioning the wiper against the visor in the operating position.

9. Vehicle roof module according to any of the preceding claims, further comprising a drive assembly (32) configured for driving the driven slider (19,119) through the guide (18).

10. Vehicle roof module according to claim 9, wherein the drive assembly (32) comprises a motor (33) and a drive cable (34), the motor (33) being arranged for operating the driven slider (19,119 ) by means of the drive cable (34).

11. Vehicle roof module according to claim 10, wherein the slider channel (25) comprises a drive cable gutter for the drive cable (34).

12. Vehicle roof module according to claim 11, wherein the recessed slide portion (28) of the slider channel (25) comprises the drive cable gutter for the drive cable (34).

13. Vehicle roof module according to any of the preceding claims, further comprising a sensor (8) having a field of view (9) aligned with the visor (7).

14. Vehicle roof module according to claim 4,
wherein the sensor housing (6, 86) comprises a second parking slot (840) on another side of the visor (7,87);
wherein the guide (18) further defines an additional parking path (822), running between the second parking slot and the wiping path (20, 820);
wherein the sliding mechanism (17) is further configured for sliding the wiper assembly (11) over the guide (18,818) along the wiping path (20, 820) and the additional parking path (841);
wherein sliding the wiper assembly (11) over the additional parking (841) path slides the wiper arm (13) along the sensor housing (6,86) while the wiper blade (12) is lifted from the visor (7,87).

## Patentansprüche

1. Fahrzeugdachmodul (1) für einen Sensor, aufweisend:
eine Wischerbaugruppe (11), die ein Wischerblatt (12) aufweist, das an einem Wischerarm (13) getragen wird,
ein Sensorgehäuse (6), das ein Visier (7) aufweist,
eine Führung (18), die einen Wischpfad (20) und einen Parkpfad (21) definiert,
einen Verschiebemechanismus (17), der konfiguriert ist zum Verschieben der Wischerbaugruppe (11) über die Führung (18) entlang dem Wischpfad (20) und dem Parkpfad (21),
wobei das Verschieben der Wischerbaugruppe (11) über den Wischpfad (20) den Wischerarm (13) entlang dem Sensorgehäuse (6) verschiebt, so dass das Wischerblatt (12) das Visier (7) wischt,
wobei das Verschieben der Wischerbaugruppe (11) über den Parkpfad (21) den Wischerarm (13) entlang dem Sensorgehäuse (6) verschiebt, während das Wischerblatt (12) von dem Visier (7) abgehoben wird, **dadurch gekennzeichnet, dass** der Verschiebemechanismus (17) aufweist:
eine planare Basis (16, 116), die auf einer Seite mindestens einen Verschiebestift (23) und auf einer anderen Seite eine Stange (15, 30, 31) aufweist, die konfiguriert ist zum Tragen der Wischerbaugruppe (11), und
einen angetriebenen Schieber (19, 119), der eine Stiftverschiebebahn (24) für jeden jeweiligen mindestens einen Verschiebestift (23) aufweist, und
wobei die Führung (18) aufweist:
einen Schieberkanal (25) zum Führen des angetriebenen Schiebers (19, 119) parallel zu dem Sensorgehäuse (6), und
einen Stangenführungsschlitz (26) zum Führen der Wischerstange (15, 30, 31) entlang dem Wischpfad (20) und dem Parkpfad (21).

2. Fahrzeugdachmodul gemäß Anspruch 1,
wobei der Stangenführungsschlitz (26) einen geraden Wischabschnitt (26a) und einen gekrümmten Parkabschnitt (26b) aufweist,
wobei die Stiftverschiebebahn (24) einen Parkabschnitt (24a, 124a) und einen Wischabschnitt (24b, 124b) aufweist.

3. Fahrzeugdachmodul gemäß Anspruch 2,
wobei, wenn der angetriebene Schieber (19, 119) in dem Schieberkanal (25) entlang dem Wischpfad (20) bewegt wird, der mindestens eine Verschiebestift (23) in dem Stiftverschiebebahn-Wischabschnitt (24b, 124b) verschoben wird und der Stangenführungsbahn-Wischabschnitt (26a) die Wischerstange (15, 30, 31) parallel entlang dem Visier (7) führt, und
wobei, wenn der angetriebene Schieber (19, 119) in dem Schieberkanal (25) entlang dem Parkpfad (21) bewegt wird, der mindestens eine Verschiebestift (23) in dem Stiftverschiebebahn-Parkabschnitt (24a, 124a) verschoben wird und der Stangenführungsbahn-Parkabschnitt (26b) die Wischerstange (15, 30, 31) bei einer Ablenkung entlang dem Visier (7) führt.

4. Fahrzeugdachmodul gemäß irgendeinem der vorhergehenden Ansprüche, wobei das Sensorgehäuse (6) ferner einen Parkschlitz (10) benachbart zu dem Visier (7) aufweist, der eine Ruheposition für die Wischerbaugruppe (11) bereitstellt,
wobei das Verschieben über den Parkpfad (21) die Wischerbaugruppe (11) zwischen der Ruheposition in dem Parkschlitz (11) und einer Betriebsposition auf dem Wischpfad (20) verschiebt.

5. Fahrzeugdachmodul gemäß Anspruch 4,
wobei in der Ruheposition die Wischerbaugruppe (11) in dem Parkschlitz (10) ruht, wobei das Wischerblatt (12) von dem Visier (7) außer Eingriff ist, und
wobei in der Betriebsposition die Wischerbaugruppe (11) mittels des Wischerblatts (12) mit dem Visier (7) in Eingriff ist.

6. Fahrzeugdachmodul gemäß irgendeinem der vorhergehenden Ansprüche, wobei das Wischerblatt (11), wenn es über den Parkpfad (20) aus der Betriebsposition heraus in Richtung zu der Ruheposition verschoben wird, von dem Visier (11) abgehoben wird, während die Wischerbaugruppe (11) weiter entlang dem Sensorgehäuse (6) verschoben wird.

7. Fahrzeugdachmodul gemäß irgendeinem der vorhergehenden Ansprüche, wobei der Schieberkanal (25) einen ausgesparten Schiebeabschnitt (28) aufweist.

8. Fahrzeugdachmodul gemäß irgendeinem der vorhergehenden Ansprüche, wobei die Wischerbaugruppe ferner aufweist Spannmittel zum Spannen des Wischers in der Betriebsposition gegen das Visier.

9. Fahrzeugdachmodul gemäß irgendeinem der vorhergehenden Ansprüche, ferner aufweisend eine Antriebsbaugruppe (32), die konfiguriert ist zum Antreiben des angetriebenen Schiebers (19, 119) durch die Führung (18).

10. Fahrzeugdachmodul gemäß Anspruch 9, wobei die Antriebsbaugruppe (32) einen Motor (33) und ein Antriebsseil (34) aufweist, wobei der Motor (33) angeordnet ist zum Betreiben des angetriebenen Schiebers (19, 119) mittels des Antriebsseils (34).

11. Fahrzeugdachmodul gemäß Anspruch 10, wobei der Schieberkanal (25) eine Antriebsseilrinne für das Antriebsseil (34) aufweist.

12. Fahrzeugdachmodul gemäß Anspruch 11, wobei der ausgesparte Schiebeabschnitt (28) des Schieberkanals (25) die Antriebsseilrinne für das Antriebsseil (34) aufweist.

13. Fahrzeugdachmodul gemäß irgendeinem der vorhergehenden Ansprüche, ferner aufweisend einen Sensor (8), der ein Sichtfeld (9) hat, das zu dem Visier (7) ausgerichtet ist.

14. Fahrzeugdachmodul gemäß Anspruch 4,
wobei das Sensorgehäuse (6, 86) einen zweiten Parkschlitz (840) auf einer anderen Seite des Visiers (7, 87) aufweist,
wobei die Führung (18) ferner einen zusätzlichen Parkpfad (822) definiert, der zwischen dem zweiten Parkschlitz und dem Wischpfad (20, 820) verläuft,
wobei der Verschiebemechanismus (17) ferner konfiguriert ist zum Verschieben der Wischerbaugruppe (11) über die Führung (18, 818) entlang dem Wischpfad (20, 820) und dem zusätzlichen Parkpfad (841),
wobei das Verschieben der Wischerbaugruppe (11) über den zusätzlichen Parkpfad (841) den Wischerarm (13) entlang dem Sensorgehäuse (6, 86) verschiebt, während das Wischerblatt (12) von dem Visier (7, 87) abgehoben wird.

## Revendications

1. Module de toit de véhicule (1) pour un capteur, comprenant :
un ensemble essuie-glace (11) comprenant un balai d'essuie-glace (12) porté sur un porte-balai d'essuie-glace (13) ;
un boîtier de capteur (6) comprenant une visière-écran (7) ;
un guide (18) définissant une trajectoire d'essuyage (20) et une trajectoire de parcage (21) ;
un mécanisme coulissant (17) configuré pour faire coulisser l'ensemble essuie-glace (11) sur le guide (18) le long de la trajectoire d'essuyage (20) et de la trajectoire de parcage (21) ;
dans lequel le coulissement de l'ensemble essuie-glace (11) sur la trajectoire d'essuyage (20) fait coulisser le porte-balai d'essuie-glace (13) le long du boîtier de capteur (6) de sorte que le balai d'essuie-glace (12) essuie la visière-écran (7) ;
dans lequel le coulissement de l'ensemble essuie-glace (11) sur la trajectoire de parcage (21) fait coulisser le porte-balai d'essuie-glace (13) le long du boîtier de capteur (6) tandis que le balai d'essuie-glace (12) est soulevé de la visière-écran (7), **caractérisé en ce que** le mécanisme coulissant (17) comprend :
une base plane (16, 116) comprenant, sur un côté, au moins une goupille coulissante (23) et, sur un autre côté, une tige (15, 30, 31) configurée pour porter l'ensemble essuie-glace (11) ; et
un coulisseau entraîné (19, 119) comprenant une piste de coulissement de goupille (24) pour chaque au moins une goupille coulissante (23) respective ; et
dans lequel le guide (18) comprend :
un canal de coulisseau (25) pour guider le coulisseau entraîné (19, 119) parallèlement au boîtier de capteur (6) ; et
une fente de guidage de tige (26) pour guider la tige d'essuie-glace (15, 30, 31) le long de la trajectoire d'essuyage (20) et de la trajectoire de parcage (21).

2. Module de toit de véhicule selon la revendication 1,
dans lequel la fente de guidage de tige (26) présente une partie d'essuyage rectiligne (26a) et une partie de parcage incurvée (26b) ;
dans lequel la piste de coulissement de goupille (24) présente une partie de parcage (24a, 124a) et une partie d'essuyage (24b, 124b).

3. Module de toit de véhicule selon la revendication 2,
dans lequel, lors du déplacement du coulisseau entraîné (19, 119) dans le canal de coulisseau (25) le long de la trajectoire d'essuyage (20), ladite au moins une goupille coulissante (23) coulisse dans la partie d'essuyage de piste de coulissement de goupille (24b, 124b) et la partie d'essuyage de piste de guidage de tige (26a) guide la tige d'essuie-glace (15, 30, 31) parallèlement le long de la visière-écran (7) ; et
dans lequel, lors du déplacement du coulisseau entraîné (19, 119) dans le canal de coulisseau (25) le long de la trajectoire de parcage (21), ladite au moins une goupille coulissante (23) coulisse dans la partie de parcage de piste de coulissement de goupille (24a, 124a), et la partie de parcage de piste de guidage de tige (26b) guide la tige d'essuie-glace (15, 30, 31) selon une déflexion le long de la visière-écran (7).

4. Module de toit de véhicule selon l'une quelconque des revendications précédentes, le boîtier de capteur (6) comprenant en outre une fente de parcage (10) adjacente à la visière-écran (7) fournissant une position de repos pour l'ensemble essuie-glace (11) ;
dans lequel le coulissement sur la trajectoire de parcage (21) fait coulisser l'ensemble essuie-glace (11) entre la position de repos dans la fente de parcage (11) et une position opérationnelle sur la trajectoire d'essuyage (20).

5. Module de toit de véhicule selon la revendication 4,
dans lequel, dans la position de repos, l'ensemble essuie-glace (11) repose à l'intérieur de la fente de parcage (10) avec le balai d'essuie-glace (12) désengagé de la visière-écran (7) ; et
dans la position de fonctionnement, l'ensemble essuie-glace (11) met en prise la visière-écran (7) avec le balai d'essuie-glace (12).

6. Module de toit de véhicule selon l'une quelconque des revendications précédentes, dans lequel, lors du coulissement sur la trajectoire de parcage (20) hors de la position opérationnelle et vers la position de repos, le balai d'essuie-glace (11) est soulevé de la visière-écran (11) tandis que l'ensemble essuie-glace (11) coulisse davantage le long du boîtier de capteur (6).

7. Module de toit de véhicule selon l'une quelconque des revendications précédentes, dans lequel le canal de coulisseau (25) comprend une partie coulissante en retrait (28).

8. Module de toit de véhicule selon l'une quelconque des revendications précédentes, dans lequel l'ensemble essuie-glace comprend en outre des moyens de mise en tension pour tendre l'essuie-glace contre la visière-écran dans la position de fonctionnement.

9. Module de toit de véhicule selon l'une quelconque des revendications précédentes, comprenant en outre un ensemble d'entraînement (32) configuré pour entraîner le coulisseau entraîné (19, 119) à travers le guide (18).

10. Module de toit de véhicule selon la revendication 9, dans lequel l'ensemble d'entraînement (32) comprend un moteur (33) et un câble d'entraînement (34), le moteur (33) étant agencé pour actionner le coulisseau entraîné (19, 119) au moyen du câble d'entraînement (34).

11. Module de toit de véhicule selon la revendication 10, dans lequel le canal de coulisseau (25) comprend une gouttière de câble d'entraînement pour le câble d'entraînement (34).

12. Module de toit de véhicule selon la revendication 11, dans lequel la partie coulissante en retrait (28) du canal de coulisseau (25) comprend la gouttière de câble d'entraînement pour le câble d'entraînement (34).

13. Module de toit de véhicule selon l'une quelconque des revendications précédentes, comprenant en outre un capteur (8) ayant un champ de vision (9) aligné avec la visière-écran (7).

14. Module de toit de véhicule selon la revendication 4, dans lequel le boîtier de capteur (6, 86) comprend une seconde fente de parcage (840) sur un autre côté de la visière-écran (7, 87) ;
dans lequel le guide (18) définit en outre une trajectoire de parcage supplémentaire (822), passant entre la seconde fente de parcage et la trajectoire d'essuyage (20, 820) ;
dans lequel le mécanisme coulissant (17) est en outre configuré pour faire coulisser l'ensemble essuie-glace (11) sur le guide (18, 818) le long de la trajectoire d'essuyage (20, 820) et de la trajectoire de parcage supplémentaire (841) ;
dans lequel le coulissement de l'ensemble essuie-glace (11) sur la trajectoire de parcage supplémentaire (841) fait coulisser le porte-balai d'essuie-glace (13) le long du boîtier de capteur (6, 86) tandis que le balai d'essuie-glace (12) est soulevé de la visière-écran (7, 87).
